# EUROPEAN PATENT SPECIFICATION

(11) **EP 3 151 658 B1**
(45) Date of publication and mention of the grant of the patent: **03.11.2021**
(21) Application number: 15732419.5
(22) Date of filing: 29.05.2015
(51) Int. Cl.: A01L 1/02, A01L 3/02

(54) **HORSESHOE**
HUFEISEN
FER À CHEVAL

(30) Priority: 06.06.2014 PT 10769014
(43) Date of publication of application: 12.04.2017
(73) Proprietor: Soares de Oliveira, Manuel António, 4524-908 Escapães (PT)
(72) Inventor: GOMES OLIVEIRA, Carlos Alberto, 4535-409 Santa Maria de Lamas (PT); SOARES DE OLIVEIRA, Manuel António, 4524-908 Escapães (PT)
(74) Representative: Patentree
(86) International application number: PCT/IB2015/054078
(87) International publication number: WO 2015/186036

(56) References cited:
- DE-A1- 10 228 728
- US-A- 1 442 748
- US-A- 2 296 111
- US-A1- 2012 180 441

## Description

### Technical field

This application relates to a horseshoe.

### Background art

From the prior art, it is well-known the use of several different types of plates as horseshoes. Nevertheless, the horseshoes are usually open and completely flat in their contact with the ground.

The document WO8500271A1 discloses a horseshoe or plate particularly adapted for race horses formed with its toe portion rolled upwardly and complementary to the horse's hoof when the latter is rasped to reduce the depth of the hoof's toe portion. The toe grab is substantially coplanar at its lower edge with the plane of the lower side of the plate. However, this document does not disclose a horseshoe comprising a rigid plate, completely closed, with anti-slip properties.

The document WO2007012128A1 discloses the design of a shoeing system specifically produced to ensure the maintenance of the breakover function of the hoof. The breakover built into the shoe is specifically produced to ensure that the tip of the pedal bone remains the central point of rotation following the addition of a shoe. However, this document does not disclose a horseshoe comprising a rigid plate, completely closed, with anti-slip properties.

The document NL8501443 discloses the shoe for a horse hoof comprising a number of block-type segments. Two opposite sides of each segment at right angles to the hoof surface curve roughly parallel to the hoof edge, while the other two converge. The segments can be joined together by flexible connecting portions into a conventional horseshoe shape. Each can comprises a holder nailed to the hoof, and a boss detachable from it.

Document US2296111 discloses a horseshoe comprising a completely closed plate.

### Summary

The present application discloses a horseshoe comprising a completely closed rigid plate, with an inclination on the front part, on both sides and the rear part, with undulating shape in contact with the ground and flat on the side of the horse's foot.

A horseshoe according to the invention is defined in claim 1.

In an embodiment, the horseshoe comprises four leaning points and a central point.

In another embodiment, the central point of the horseshoe is located so as to be in the vertical direction of the horse's foot.

In even another embodiment, the horseshoe is configured to be applied on the horse's hoof with glue or mechanical connectors.

In an embodiment, the mechanical connectors used in the horseshoe are nails.

According to the invention, the rigid plate of the horseshoe has a smaller thickness at each left and right side and at each front and rear part, and a greater thickness at a central part of the rigid plate.

In even another embodiment, the rear part of the horseshoe has a round end shape and it has a steeper slope than the sides with non-slip ridges.

In an embodiment, the rigid plate of the horseshoe can be manufactured in aluminum, rubber, thermoplastic polyurethane, thermally rearranged polymer, thermoplastic starch, wood, styrene-butadiene, carbon, kevlar, plastic and leather.

### General description

The present application falls within the domain of elements to the horse's hoof. The technology here disclosed is intended to help generate greater comfort to the horse, to contribute to a better balance in every movement and to obey to the natural horse's characteristics.

The technology hereby disclosed refers to a non-open rigid plate to be applied to the horse's hoof. This technology aims to clear the toggle concerning to the traditional horseshoe with full reconciliation of the horse's anatomy, which can be applied with glue or mechanical connectors, like nails for example, on the horse's hoof.

The horseshoe comprises a rigid plate, completely closed, with anti-slip properties. It leans in the front part, rear part, right part and left part. It has shock-absorbing effect, the "banana" shape, a smooth rifling surface to apply to the horse's hoof. The contact of the plate to the ground, due to the inclinations and the "banana" shape with non-slip tread, allows movements according to the horse's anatomy at the level of the phalanges and tendons. Concerning to the left side of the horseshoe, leaning and non-slipping, it is intended to allow inclination to left side movement and the ridges will turn into a non-slipping plate. Concerning to the right side of the horseshoe, leaning and non-slipping, it is intended to allow inclination to right side movement and the ridges will turn into a non-slipping plate.

Concerning to the rear part of the horseshoe, it has a round shape and it is steeper slope than the sides, with ridges for anti-slip function. Concerning to the central part of the horseshoe with a "banana" shape, it is intended to generate all the plate's balance with sliding movement in the impulsion step, but keeping its anti-slipping function.

This rigid plate has high resistance and can be manufactured in aluminum, rubber, thermoplastic polyurethane, thermally rearranged polymer, thermoplastic starch, wood, styrene-butadiene, carbon, kevlar, plastic and leather.

### Brief description of the drawings

For easier understanding of this application, figures are attached that represent different embodiments which nevertheless are not intended to limit the technology disclosed herein.
Figure 1 illustrate a general perspective of the horseshoe wherein the reference numbers are related with:
   1 - front part;
   2 - left side;
   3 - right side;
   4 - rear part;
   5 - central part.
Figure 2 illustrate a general perspective of the horseshoe wherein the reference numbers are related with:
   1 - front part;
   2 - left side;
   3 - right side;
   4 - rear part;
   5 - central part.
Figure 3 illustrate a general perspective of the horseshoe wherein the reference numbers are related with:
   1 - front part;
   2 - left side;
   3 - right side;
   4 - rear part;
   5 - central part.
Figure 4 illustrate a general perspective of the horseshoe wherein the reference numbers are related with:
   1 - front part;
   2 - left side;
   3 - right side;
   4 - rear part;
   5 - central part.
Figure 5 illustrate a general perspective of the horseshoe wherein the reference numbers are related with:
   1 - front part;
   2 - left side;
   3 - right side;
   4 - rear part;
   5 - central part.

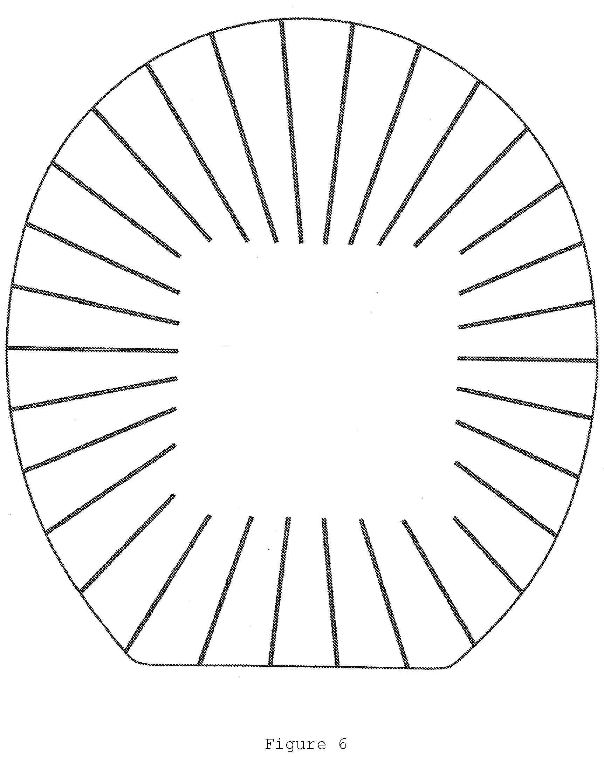

Figure 6 illustrate the contact part between the horseshoe and the horse's hoof.

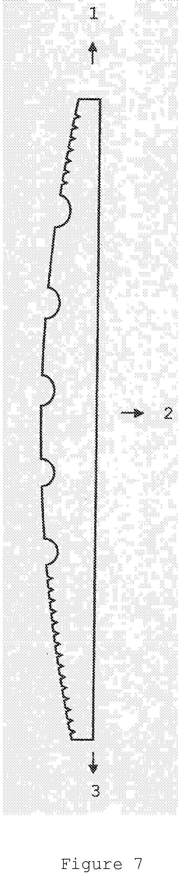

Figure 7 illustrate the "banana" format shape of the rigid plate wherein the reference numbers are related with:
   1 - front part;
   2 - left side;
   3 - right side.

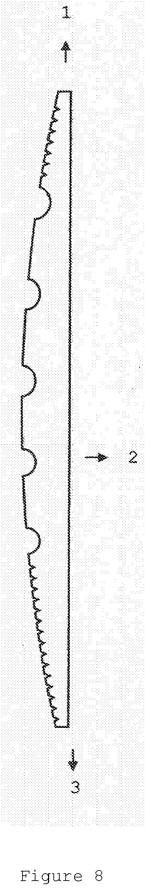

Figure 8 illustrate the "banana" format shape of the rigid plate wherein the reference numbers are related with:
   1 - front part;
   2 - left side;
   3 - right side.

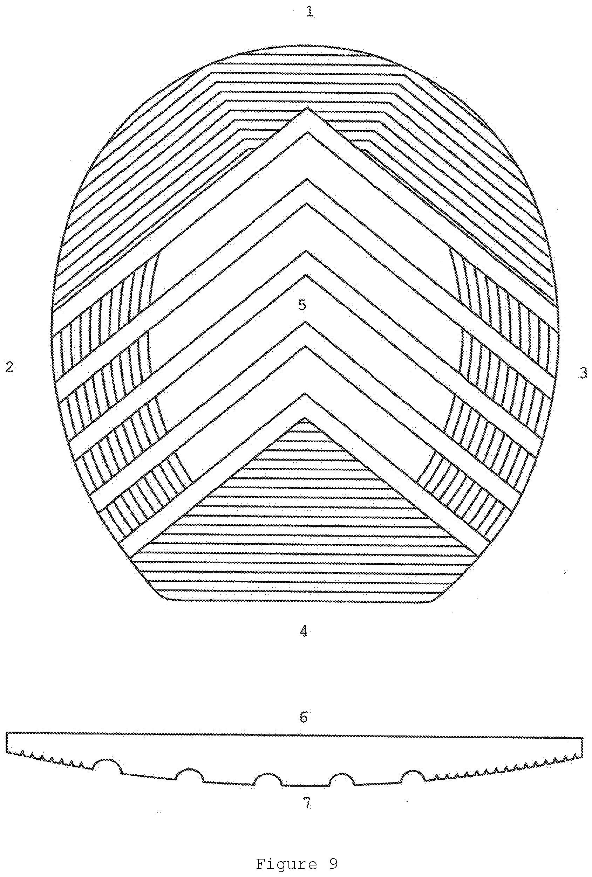

Figure 9 illustrate the general plate's perspective on the side of contact with the ground and a side perspective equivalent to the shape of a "banana" wherein the reference numbers are related with:
   1 - front part;
   2 - left side;
   3 - right side;
   4 - rear part;
   5 - central part;
   6 - horse's foot side;
   7 - "banana" shape.

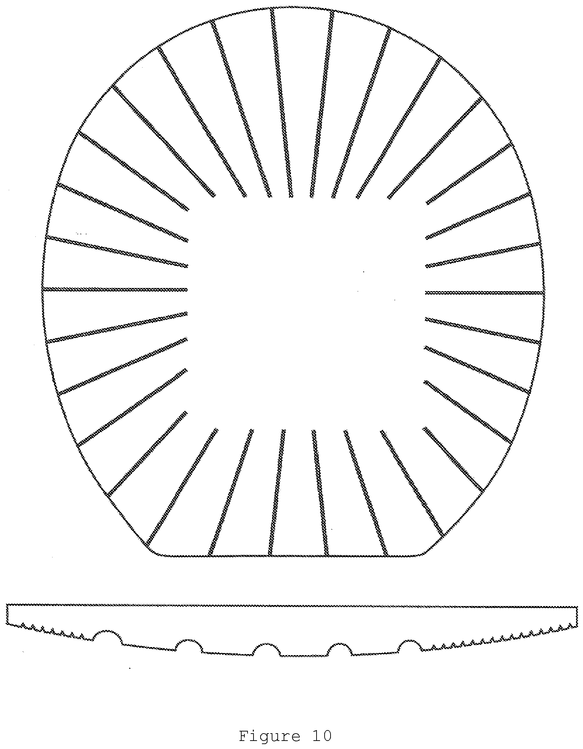

Figure 10 illustrate a general plate's perspective on the side of contact with the horse's hoof and a side perspective equivalent to the shape of a "banana".

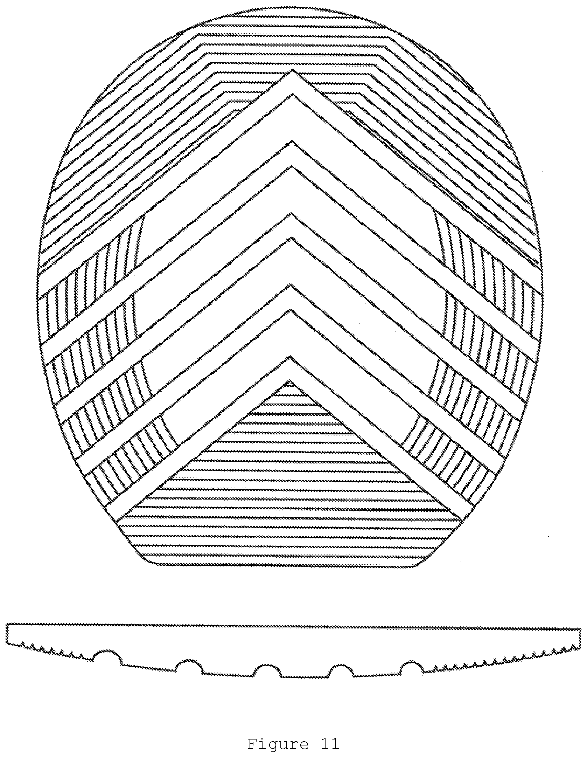

Figure 11 illustrate the general plate's perspective on the side of contact with the ground and a side perspective equivalent to the shape of a "banana".

### Description of embodiments

The following text provides an explanation on the different embodiments of the technology disclosed in the present application. This explanation is not an extensive overview and does not intend to delineate the scope of the protection or any critical aspect or element of the same technology.

The technology hereby disclosed aims to clear the toggle concerning the traditional open application horseshoe to the horse's hoof while a total reconciliation with the horse's anatomy, it can be applied with specific glue or any mechanical connection, like nailed on the horse's hoof.

One of technology embodiments consists of a rigid plate, completely closed, with an inclination on the front part, on both sides and the rear part, with undulating form equivalent to the shape of a "banana" in contact with the ground as it has at least four leaning points plus the central point. The rigid plate is flat on the side of the horse's foot and it has an undulating shape in contact with the ground. The center of the plate is located so as to be articulated in the vertical direction of the horse's foot that, when applied to the hoof, it takes the undulating form equivalent to the "banana" shape (7).

The undulating form is obtained by the plate having the smallest thickness at the ends of each side, especially in the front part (1) and the rear part (4), and the plate's thickness is greater at the center part (5). The plate, when applied to the horse's hoof, has its undulating shape equivalent to the shape of a "banana" in contact with the ground and intends to create balance with the natural movement of the horse and to serve as slide impulse to the march of horses and, at the same time, to generate a slide effect on the phase of deceleration. It is intended with this purpose to correct and to relieve all the horse's tendons and ligaments system.

Its undulating form equivalent to the shape of a "banana" in contact with the ground is the great reference of this technology as it will allow a correct support of the horse's foot and the plantar angle, it relieves the suspending system and increases blood infusion in the horse's foot to promote the wall and the sole.

The rigid plate is completely closed and this is also a differentiating element to the existing traditional model which is normally opened according to the anatomy of the horse's hoof.

This rigid plate has high resistance and is composed by aluminum, rubber, thermoplastic polyurethane, thermally rearranged polymer, thermoplastic starch, wood, styrene-butadiene, carbon, kevlar, plastic and leather.

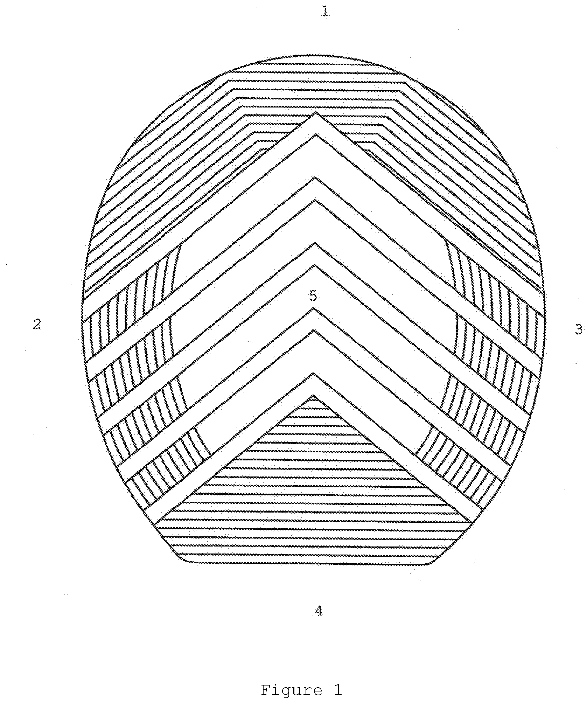

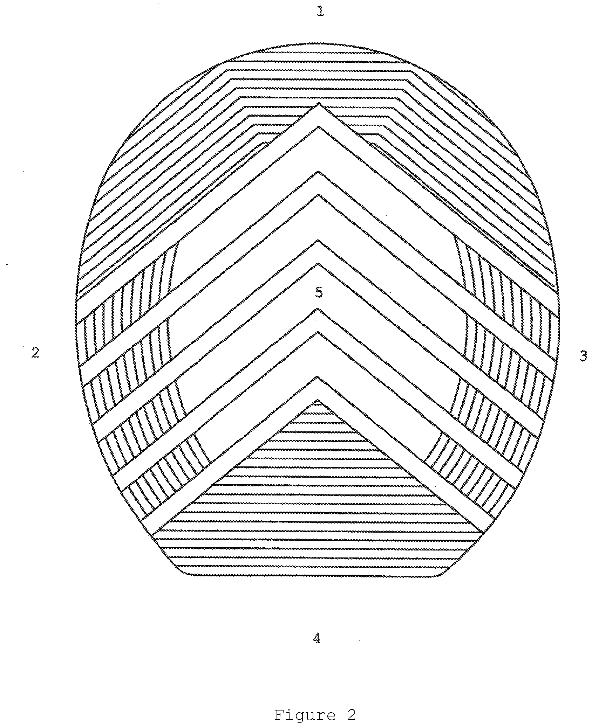

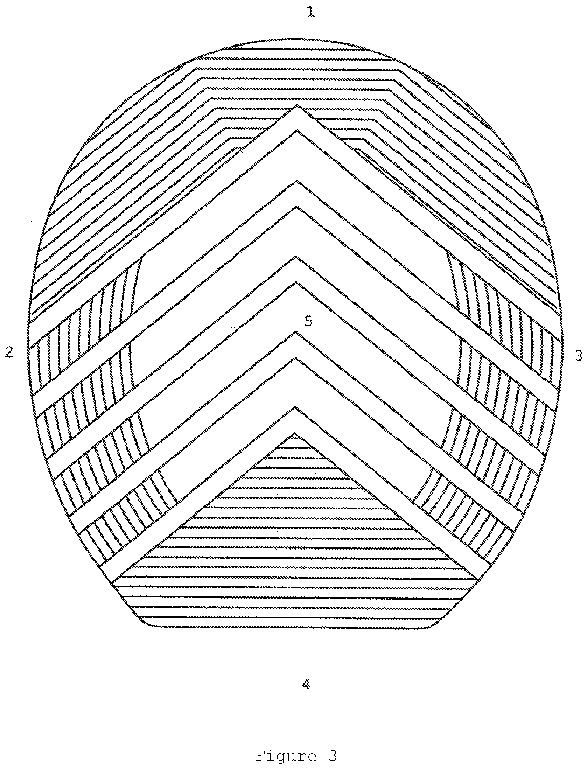

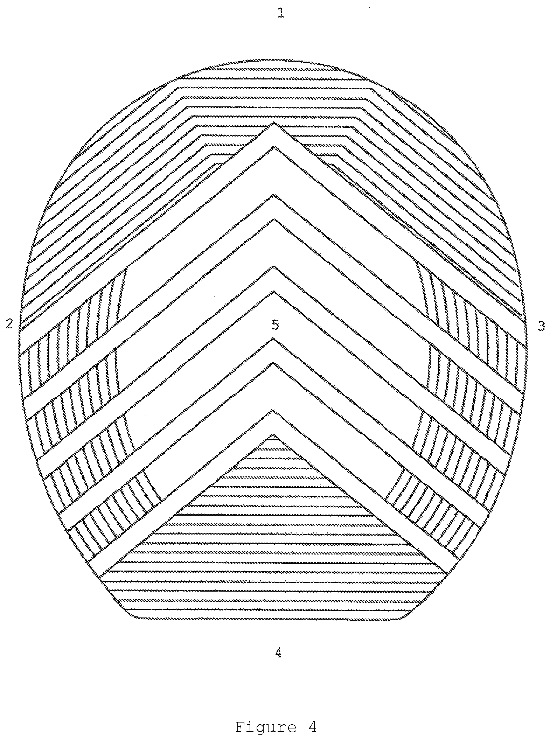

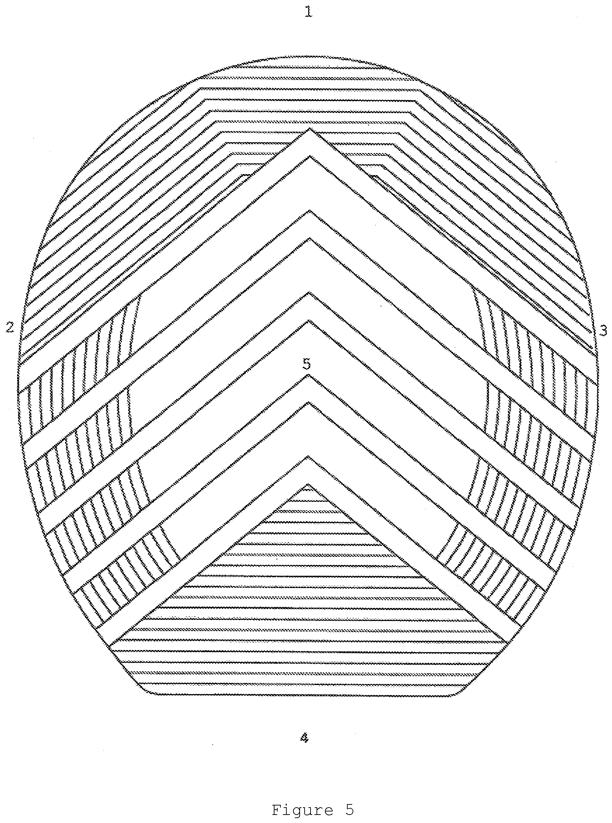

Concerning to Figures 1, 2, 3, 4 and 5 it is referred that the leaning and non-slipping left side (2), is intended to be allowed to lean towards the left lateral movement and the ridges to make the non-slipping plate.

The leaning and non-slipping right part (3), is intended to be allowed to lean towards the right lateral movement and the ridges to make the plate non-slipping.

As for the rear part (4), it has a round end, with a more pronounced inclination than the sides, with ridges for non-slip function.

About the central part (5), undulating, it is intended to be assured all plate's balance through with motion slide and also to have anti-slipping function.

The front part (1) of the horseshoe can have a thickness comprised between 3 and 5 mm. The rear part (4) of the horseshoe can have a thickness comprised between 3 and 5 mm. The central part (5) of the horseshoe can have a thickness comprised between 11 and 14 mm. Other thicknesses can be possible to meet client's requests.

This description is of course not in any way restricted to the embodiments presented herein and any person with an average knowledge of the area can provide many possibilities for modification thereof without departing from the general idea as defined by the claims. The embodiments described above can obviously be combined with each other. The following claims further define different embodiments.

## Claims

1. Horseshoe comprising a completely closed rigid plate,
wherein the rigid plate comprises a lower ground contacting surface and an upper hoof surface for applying to the horse's hoof, and
the rigid plate comprises a front part (1), a left side (2), a right side (3), a rear part (4), with an inclination on the front part (1), on both left and right sides (2,3) and the rear part (4), such that the rigid plate has a smaller thickness at each left and right side (2,3) and at each front (1) and rear part (4), and a greater thickness at a central part (5) of the rigid plate,
wherein the lower ground contacting surface comprises an undulating shape for contact with the ground and the upper hoof contacting surface is flat for contacting the horse's hoof.

2. Horseshoe according to the previous claim, comprising four leaning points and a central point.

3. Horseshoe according to the previous claim, wherein the central point is located so as to be in the vertical direction of the horse's hoof.

4. Horseshoe according to any of the previous claims, wherein said horseshoe is configured to be applied on the horse's hoof with glue or mechanical connectors.

5. Horseshoe according to the previous claim, wherein the mechanical connectors are nails.

6. Horseshoe according to any of the previous claims, wherein the rear part (4) has a round end shape and it has a steeper slope than the sides, with non-slip ridges.

7. Horseshoe according to any of the previous claims, wherein the rigid plate is manufactured in aluminium, rubber, thermoplastic starch, wood, styrene-butadiene, carbon, Kevlar, plastic and leather.

8. Horseshoe according to any of the previous claims wherein the upper hoof contacting surface comprises a smooth rifling surface.

9. Horseshoe according to any of the previous claims wherein the front part (1) of the horseshoe has a thickness between 3 and 5 mm, the rear part (4) of the horseshoe has a thickness between 3 and 5 mm, and the central part (5) of the horseshoe has a thickness between 11 and 14 mm.

## Patentansprüche

1. Hufeisen, umfassend eine vollständig geschlossene, starre Platte,
wobei die starre Platte eine untere Kontaktfläche mit dem Boden und eine obere Kontaktfläche mit dem Huf zur Befestigung am Huf des Pferdes aufweist, und
die starre Platte einen vorderen Teil (1), eine linke Seite (2), eine rechte Seite (3) und einen hinteren Teil (4) mit einer Neigung am vorderen Teil (1), sowohl an der linken als auch an der rechten Seite (2, 3) und dem hinteren Teil (4) aufweist, sodass die starre Platte eine geringere Stärke an jeder linken und rechten Seite (2, 3) und an jedem vorderen (1) und hinteren Teil (4) sowie eine größere Stärke an einem zentralen Teil (5) der starren Platte aufweist,
wobei die untere Kontaktfläche mit dem Boden eine wellenförmige Form für den Kontakt mit dem Boden aufweist und die obere Kontaktfläche mit dem Huf flach ist, um den Huf des Pferdes zu berühren.

2. Hufeisen nach dem vorangehenden Anspruch, bestehend aus vier Abstützpunkten und einem zentralen Punkt.

3. Hufeisen nach dem vorangehenden Anspruch, wobei der zentrale Punkt so angeordnet ist, dass er in der vertikalen Richtung des Pferdehufs liegt.

4. Hufeisen nach einem der vorangehenden Ansprüche, wobei das genannte Hufeisen so konfiguriert ist, dass es mit Klebstoff oder mechanische Verbindungen am Pferdehuf angebracht werden kann.

5. Hufeisen nach dem vorangehenden Anspruch, wobei die mechanischen Verbindungen Nägel sind.

6. Hufeisen nach einem der vorangehenden Ansprüche, wobei der hintere Teil (4) eine runde Endform und eine steilere Neigung als die Seiten hat, mit rutschfesten Rillen.

7. Hufeisen nach einem der vorangehenden Ansprüche, wobei die starre Platte aus Aluminium, Gummi, thermoplastischer Stärke, Holz, Styrol-Butadien, Kohlenstoff, Kevlar, Kunststoff und Leder hergestellt ist.

8. Hufeisen nach einem der vorangehenden Ansprüche, wobei die obere Kontaktfläche mit dem Huf eine ebene Riffelfläche aufweist.

9. Hufeisen nach einem der vorangehenden Ansprüche, wobei der vordere Teil (1) des Hufeisens eine Stärke zwischen 3 und 5 mm, der hintere Teil (4) des Hufeisens eine Stärke zwischen 3 und 5 mm und der mittlere Teil (5) des Hufeisens eine Stärke zwischen 11 und 14 mm hat.

## Revendications

1. Fer à cheval comprenant une plaque rigide complètement fermée,
dans lequel la plaque rigide comprend une surface de contact au sol inférieure et une surface de sabot supérieure à appliquer sur le sabot du cheval, et
la plaque rigide comprend une partie avant (1), un côté gauche (2), un côté droit (3), une partie arrière (4), avec une inclinaison sur la partie avant (1), sur les deux côtés gauche et droit (2, 3) et la partie arrière (4), telle que la plaque rigide ait une plus petite épaisseur sur chacun des côtés gauche et droit (2, 3) et sur chacune des parties avant (1) et arrière (4), et une plus grande épaisseur sur une partie centrale (5) de la plaque rigide,
dans lequel la surface de contact au sol inférieure comprend une forme ondulée pour un contact avec le sol et la surface de contact avec le sabot supérieure est plate pour être en contact avec le sabot du cheval.

2. Fer à cheval selon la revendication précédente, comprenant quatre points d'appui et un point central.

3. Fer à cheval selon la revendication précédente, dans lequel le point central est localisé de façon à être dans la direction verticale du sabot du cheval.

4. Fer à cheval selon l'une quelconque des revendications précédentes, dans lequel ledit fer à cheval est configuré pour être appliqué sur le sabot du cheval avec de la colle ou des connecteurs mécaniques.

5. Fer à cheval selon la revendication précédente, dans lequel les connecteurs mécaniques sont des clous.

6. Fer à cheval selon l'une quelconque des revendications précédentes, dans lequel la partie arrière (4) a une forme finale ronde et a une déclivité plus accentuée que les côtés, avec des stries antidérapantes.

7. Fer à cheval selon l'une quelconque des revendications précédentes, dans lequel la plaque rigide est faite en aluminium, caoutchouc, amidon thermoplastique, bois, styrène-butadiène, carbone, Kevlar, plastique et cuir.

8. Fer à cheval selon l'une quelconque des revendications précédentes, dans lequel la surface de contact avec le sabot supérieure comprend une surface à rayures lisses.

9. Fer à cheval selon l'une quelconque des revendications précédentes, dans lequel la partie avant (1) du fer à cheval a une épaisseur située entre 3 et 5 mm, la partie arrière (4) du fer à cheval a une épaisseur située entre 3 et 5 mm, et la partie centrale (5) du fer à cheval a une épaisseur située entre 11 et 14 mm.
